# EUROPEAN PATENT SPECIFICATION

(11) **EP 1 072 817 B1**
(45) Date of publication and mention of the grant of the patent: **11.01.2006**
(21) Application number: 00202630.0
(22) Date of filing: 21.07.2000
(51) Int. Cl.: F16H 61/46, F16H 47/04

(54) **Hydro-mechanical transmission system for an agricultural harvesting machine**
Hydromechanisches Getriebe für eine landwirtschaftliche Erntemaschine
Transmission hydro-mécanique pour une moissonneuse agricole

(30) Priority: 28.10.1999 US 428847
(43) Date of publication of application: 31.01.2001
(73) Proprietor: CNH Belgium N.V., 8210 Zedelgem (BE)
(72) Inventor: Hansen, John C., Denver, PA 17517 (US); Frego, Jeffery D., New Holland, PA 17557 (US); Templeton, David J., New Holland, PA 17557 (US); Young, Steven C., Lancaster, PA 17601 (US)
(74) Representative: Vandenbroucke, Alberic

(56) References cited:
- US-A- 4 019 404
- US-A- 5 622 050
- US-A- 5 667 452
- US-A- 5 682 315
- US-A- 5 865 700

## Description

This invention relates to the improvement of a hydro-mechanical transmission on an agricultural harvesting machine. More specifically, it relates to the use of such transmission for controlling the rotation of a crop processing unit such as a threshing rotor on a combine.

Mechanical harvesting of grain has taken place for decades. However, efforts continue in the attempt to make harvesting operations more efficient and effective. A combine harvester generally includes a header, which cuts the crop. The header then moves the cut crop into a feeder house. The feeder house lifts the cut crop into the threshing, separation and cleaning areas of the combine. The grain is separated from the stalk by a rotor or cylinder threshing system. The grain is then separated and moved and stored in a grain tank. The chaff and trash are deposited from the rear of the combine. The grain stored in the grain tank is eventually discharged through a grain tank unload tube. An operator usually runs these various operations from a glass-enclosed cab. Typically, the cab is located above and behind the header and feeder house.

There are a variety of agricultural combine harvesters and their operations are well known in the art. For examples of such harvesters reference is made to US-A-4,846,198 which illustrates the conventional and twin rotor threshing and separating systems of a harvester as well as other major systems of the harvester. See also the New Holland Super Conventional Combines TX®66, TX®68, the New Holland TWIN ROTOR@ combines TR®89 and TR®99 for examples of existing conventional and twin rotor harvesters. US-A-4,332,262 also illustrates the primary systems of a conventional harvester. For further details regarding various agricultural harvester systems review US-A-4,522,553, US-A-9,800,711, US-A-4,866,920, US-A-4,907,902, US-A-4,967,544 and US-A-5,155,984. See also the New Holland corn head model 996 and the New Holland grain belt header model 994 for details regarding headers.

The previously mentioned threshing and separating system consists of several elements. These include the threshing rotor, concave, grain pan, sieves and fans. Of critical importance is the control of the rotation of the rotors. Typically, the engine would transmit rotational energy to the rotor by a belt drive. The belt drive could be engaged by a clutch or variable sheave arrangement. However, in order to increase the amount of crop processed by the harvester, the size, weight and power consumption of the rotors are being increased to levels above the tolerances of belt driven technology. To prevent the loss of the belt (and consequently the rotation of the rotor), hydraulic drive systems have been proposed to transmit the rotational energy from the engine to the rotor, as illustrated by DE-A-1,297,391.

Additionally, it is difficult to start rotating a heavy rotor under certain crop conditions. Besides placing an enormous amount of stress on the belt drive, there is an enormous amount of stress placed on the clutch used to engage the belt drive. The stress on the clutch can be severe resulting in early clutch failure. Further, there are instances where crop becomes plugged between the rotor and concave. In this situation it may be desirable to briefly reverse the rotation of the rotor to force the plug out.

The prior art illustrates these and other difficulties. US-A-5,865,700 discloses a hydro-mechanical transmission with the features of the preamble of claim 1. The transmission is powered by an engine and hydrostatic motor which derives its power from the engine. A single clutch controls the input of the engine power and input of the hydrostatic motor power by means of a control circuit. However, if input from the hydrostatic motor is not precisely synchronised the input of the hydrostatic motor could brake the engine resulting in potentially disastrous damage to the engine. US-A-5,667,452 discloses a split torque transmission and US-A-4,019,404 discloses a power transmission. In both designs there are limits to the ability to slowly engaging the clutch so as to prevent damage.

A hydro-mechanical transmission that would allow the rotation of the clutch and rotor to be slowly increased without damage to the clutch would be a great improvement. An invention that could resolve these issues would represent an improvement to the art.

A drive system for an agricultural harvesting machine has to be able to cope with a wide range of loads. However the operator always tends to use the machine near its maximum capacity. Under these circumstances it cannot be excluded that the maximum load occasionally is exceeded and that the crop processing means get stalled. On the one hand, the transmission should react to imminent stalling before a complete stand-still ensues. On the other hand the transmission should provide the means for dislodging stuck crop material if the processing means got stalled after all.

Hence it is an object of the present invention to provide a versatile transmission system which can provide a wide range of operating speeds and operate efficiently under a wide range of loads.

According to the invention there is provided an agricultural harvesting machine, comprising:
an engine having an engine drive shaft;
a crop processing means comprising a rotor having a rotor drive shaft; and
a hydro-mechanical transmission system for driving said crop processing means, said system comprising:
   - a hydrostatic pump operably connected to said engine drive shaft;
   - a hydrostatic motor operably connected to said hydrostatic pump and having a motor output shaft;
   - a clutch operably connected to said engine drive shaft and having a clutch output means, said clutch being provided with clutch control means for engaging and disengaging said clutch;
   - a planetary drive operably connected to said clutch output means and to said motor output shaft and having a drive output means operably connected to said rotor drive shaft;
   - an engine speed sensor for generating a signal indicative of the speed of said engine;
   - a rotor speed sensor for generating a signal indicative of the speed of said rotor; and
   - transmission control means for controlling the engagement of said clutch and the setting of said hydrostatic pump, said transmission control means comprising a microcomputer comprising:
      a means for receiving said signal from said engine speed sensor;
      a means for receiving said signal from said rotor speed sensor;
      a means for sending a pump control signal to said hydrostatic pump;
      a means for sending a clutch control signal to said clutch control means;

   wherein said transmission control means are operable to control said clutch and said hydrostatic pump to adapt said rotor speed such that the ratio of said engine speed and said rotor speed is equal to a predetermined ratio value,
   characterised in that said transmission control means further comprises:
   means for entering a value for the wanted engine speed and a value for the wanted rotor speed; and
   means for deriving said ratio value from said engine speed and rotor speed values.

The harvesting machine may be a combine harvester and the rotor may be a threshing rotor.

Advantageously the control means adjust the rotor speed to obtain a predetermined ratio of the rotor speed to the engine speed. Under these circumstances the rotor speed is diminished in accordance with the engine speed. As a result, the control means do not try to speed up the rotor while the engine is slowing down because of overload. Both the engine and the rotor slow down, such that the power requirements are diminished and the engine can process the material in the machine after all. This rotor speed control allows the engine to 'lug' down temporarily in heavy loads without increasing torque and stalling.

The clutch, preferably a wet clutch, can be controlled via a solenoid controlled valve, which allows for a gradual engagement of the clutch. The rotation of the rotor can be monitored to adapt the engagement phasing of the clutch to the actual start-up conditions, thereby preventing excessive slippage and protecting the clutch. Under extremely heavy conditions, the clutch valve may be quickly opened and closed to provide additional hydraulic fluid to the clutch allowing for faster synchronisation of the clutch.

The planetary drive may be provided with a braking means for arresting a component thereof. While the component is arrested, the hydraulic motor can be operated to slowly rotate the rotor backwards for dislodging a plug of crop material caught between the rotor and the threshing concave.

The transmission control means may also provide for engagement at lower speeds to reduce the load (inertia) on the clutch then automatically resetting the rotor speed to the desired set speed.

An embodiment of the present invention will now be described in greater detail, by way of example, with reference to the accompanying drawings, wherein:
Fig. 1 is a cutaway side view of a combine provided with a threshing mechanism which is driven by a hydro-mechanical transmission system;
Fig. 2 is a schematic figure showing the hydro-mechanical transmission system;
Fig. 3 is a graph illustrating the operation of the controls of the clutch of the system of Fig. 2;
Fig. 4 is a graph illustrating the relationship between the rotational speeds of the sun, ring and carrier gears in the planetary drive of the system of Fig. 2; and
Fig. 5 is a graph illustrating the adaptive main clutch engagement.

Left and right references throughout the description are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to ground.

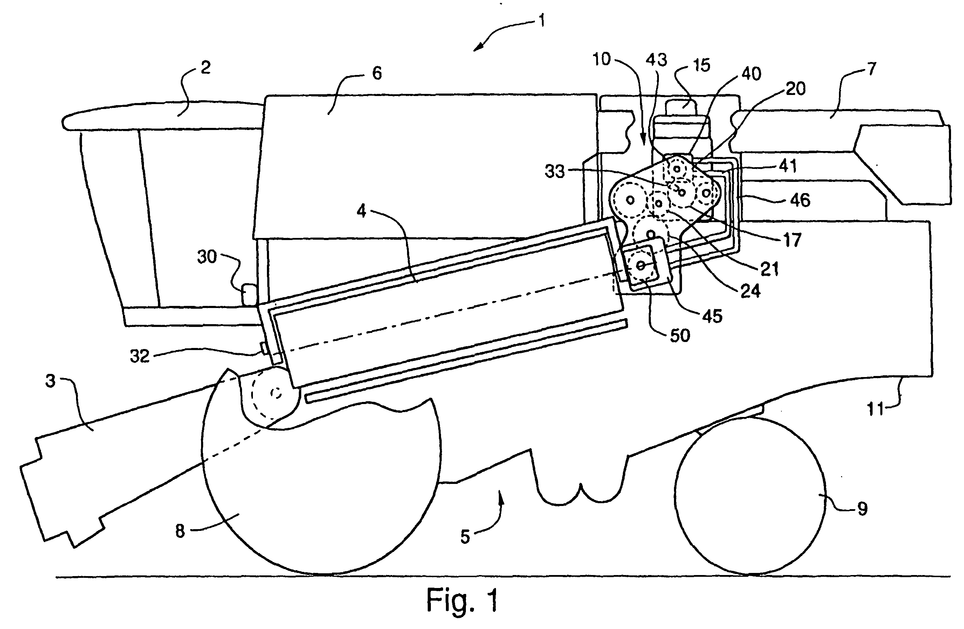

Fig. 1 shows a typical twin rotor combine 1 having a pair of front wheels 8 (only one shown) and a pair of rear wheels 9 (only one shown) for providing movement over the ground. At the front of the combine is a header (not shown) for cutting a crop. As the combine 1 and header are moved forward, the header cuts the grain and stalk. The header moves the grain into an auger trough. A transverse auger pushes the grain and stalk in the auger trough to the centre of the header. The header may be positioned and re-positioned relative to the ground. The header may also be tilted to the left or right or may be positioned relatively high or low to the ground. These features are constantly being adjusted depending on the terrain and crop conditions. Moveable headers are well known and established in the art. Located at the rear centre of the header is the feeder house 3 or elevator. The feeder house 3 moves the grain and stalks rearward into the threshing, separation, cleaning and clean grain systems 5 of the combine 1. After processing, separation and cleaning the grain is stored in a grain tank 6 located near the top of the combine 1. The grain is transferred from the grain tank 6 to a transport vehicle by an unloading auger through the grain tank unload tube 7. Usually during the harvesting operations, the unloading auger remains undriven and the grain tank unload tube 7 remains retracted as shown in Fig. 1. However, the combine can be unloaded on the go'. A separate vehicle such as a truck or tractor-pulled grain cart drives beside the moving combine. The processed grain is discharged while the combine and receiving vehicle are moving. The trash or chaff is ejected by a chaff spreader (not shown) from the rear 11 of the combine. The operator controls the combine 1 from the cab 2 located behind the header and at the front of the combine. From the cab the operator can observe most of the various combine functions. The cab 2 usually has a large glass window or several windows which afford the operator the maximum ability to monitor the header. The combine 1 and various systems are powered by an engine 15 generally positioned at the rear of the combine 1. Most of the major systems in a combine are discussed and well known in the prior art.

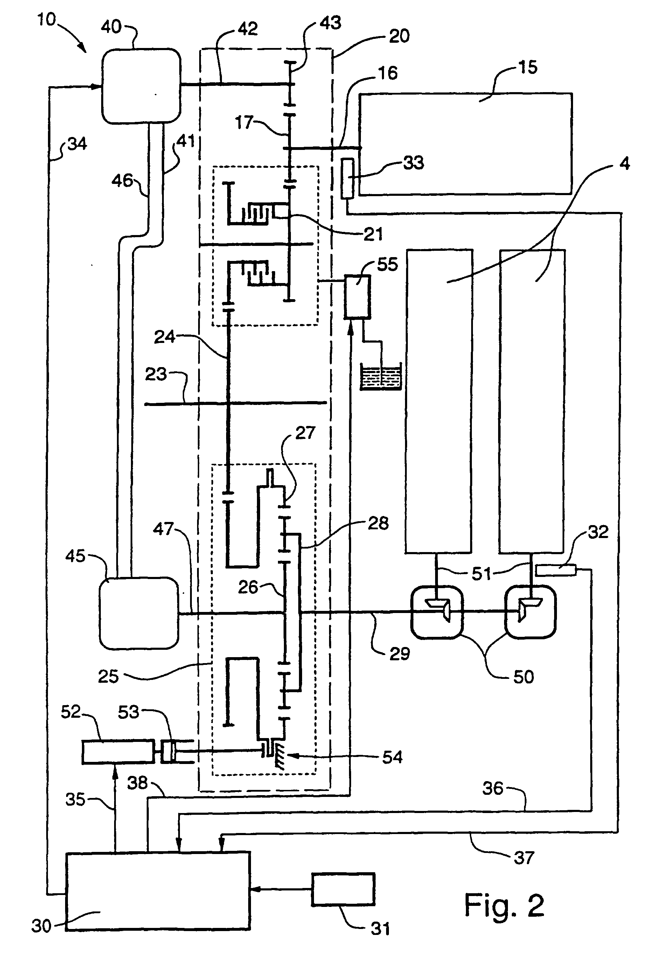

The present invention focuses on the hydro-mechanical transmission 10 of an agricultural combine as seen in Fig. 1 and represented schematically in Fig. 2. The general elements include the engine 15 powering a gearbox 20. The rotational power from the gearbox 20 is transmitted to the rotors 4 (only 1 visible in Fig. 1). The entire system is controlled by a microcomputer 30 positioned in the cab 2. The microcomputer 30 receives information from an engine speed sensor 33 (proximate to the engine 15) and a rotor speed sensor 32 (proximate to the front of the rotors 4, beneath the cab 2). Using the information received from the sensors 32 and 33, the microcomputer controls a hydrostatic pump 34, a clutch 21 and a planetary drive 25.

Now that the general elements have been reviewed, the specific elements of the hydro-mechanical transmission 10 will be discussed in detail. These elements may best be seen be viewing Fig. 2. Typically the engine 15 rotates an engine drive shaft 16 which rotates an engine drive gear 17. The engine drive gear 17 drives an input gear 43 and the clutch 21. The input gear 43 drives an input shaft 42 which drives the hydrostatic pump 40'. The hydrostatic pump 40 is connected to the hydrostatic motor 45 by a first hydrostatic line 41 and a second hydrostatic line 46. The hydrostatic motor 45 has a motor output shaft 47 that drives the planetary drive 25. The hydro-mechanical drive has an output, the rotor drive shaft 29, which drives a pair of rotor bevel gear boxes 50. Each rotor gear box 50 drives a rotor gear box output shaft 51 which rotates one of the rotors 4.

The single input to the clutch 21, as previously mentioned, is the engine drive gear 17 and the single output from the clutch 21 is a main output gear 24. The main output gear 24 drives both the main output shaft 23 and the planetary drive 25. The main output drive 23 can drive the cleaning shoe, clean grain system, returns system and/or the feeder house 3. It is also conceivable to connect the main output gear 24 to the rotor drive shaft 29 by means of a conventional belt drive. This embodiment would be advantageous for smaller diameter rotors or in lighter crop conditions.

As previously disclosed both the main output gear 24 and the motor output shaft 47 drive the planetary drive 25. The drive 25 consists of a sun gear 26 driven by the motor output shaft 47, a ring gear 27 driven by the main output gear 24 and a planet gear carrier 28. The carrier 28 acts to combine the rotation of the ring gear 27 and sun gear 26 as is well known in the art. The carrier 28 rotates the rotor drive shaft 29.

Controlling the hydrostatic pump 40, clutch 21 and planetary drive 25 is the microcomputer 30. It receives signals from the engine speed sensor 33 and the rotor speed sensor 32. The sensors 33 and 32 are conventional rotational speed sensors which monitor the rotation of the engine 15 and a rotor. The engine speed sensor 33 sends a signal 37 to the microcomputer. Likewise, the rotor speed sensor 32 sends a signal 36 to the microcomputer 30. The microcomputer 30 can use the information from the sensors 32 and 33 to send a signal 34 to the hydrostatic pump 40. By adjusting the angle of the swash plate in the pump 40, the speed of the hydrostatic motor's output shaft 47 may be adjusted in a conventional and infinitely variable manner.

Controlling the clutch 21 is a solenoid controlled clutch valve 55. Preferably but not necessarily this valve is a solenoid actuated, proportional pressure reducing valve. The actuation of the clutch valve 55 allows a quantity of hydraulic fluid to enter or leave the clutch 21 in order to control the pressure applied to the clutch 21. The microcomputer 30 transmits a signal 35 to solenoid actuating the clutch valve 55 and allowing pressurised hydraulic fluid to enter the clutch 21 from a feed pump (not shown) which draws from a reservoir.

The microcomputer 30 is also capable of sending a signal 35 to a solenoid actuated valve 52. This valve 52 controls a conventional piston and cylinder arrangement 53 that extends to contact a brake 54. The brake 54 is provided to the ring gear 27 of the planetary drive 25. The actuation of the valve 52 extends the piston and cylinder 53 and prevents the rotation of the ring gear 27. In another embodiment, the brake 54 could be a park pawl contacting one the gear teeth on the ring gear 27. The microcomputer 30 also has a switch or keyboard 31 that allows the operator to set the desired speed of the rotors 4 in the microcomputer 30.

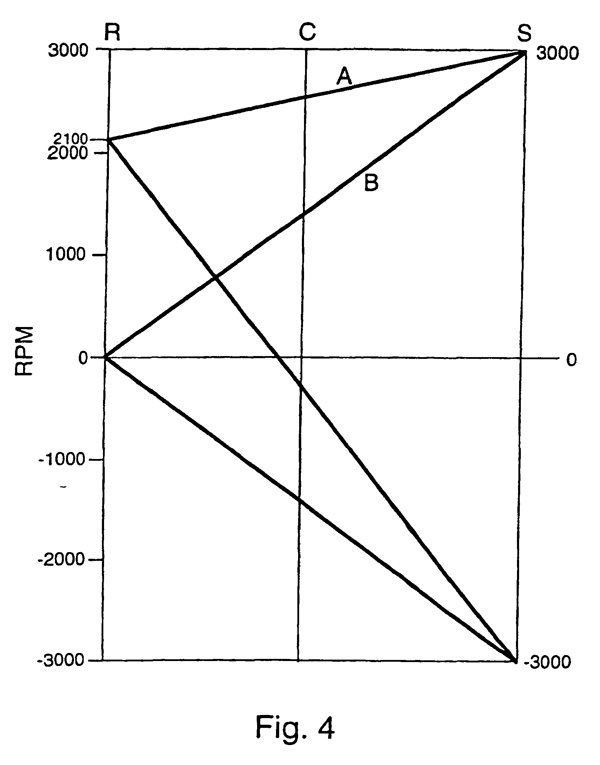

During regular farming operations with the clutch 21 engaged, the engine 15 drives the engine drive shaft 16 that rotates the engine drive gear 17. The engine drive gear 17 drives the clutch 21 and the input gear 43 to the hydrostatic pump 40. The output of the clutch 21 is transmitted to the ring gear 27 by the main output gear 24. The hydrostatic pump 40 drives the hydrostatic motor 45 which rotates the motor output shaft 47. The motor output shaft 47 drives the sun gear 26. The rotation of ring gear 27 and sun gear 26 can result in a rotational range of speed and power being transmitted to the carrier 28 and consequently the rotors 4. In this manner the engine 16 may be operated at peak efficiency and by adjusting the swash plate on the hydrostatic pump 40 the rotor speed can be altered. As illustrated by graph A of Fig. 4, the engine 16 and ring gear 27 are rotating at a fixed rate of 2100 revolutions per minute (rpm) (ring gear R in Fig. 4). The hydrostatic motor 45 which is adjustable by the hydrostatic pump 40, has an approximate range of +3000 rpm to -3000 rpm (sun gear S in Fig. 4). The speed of carrier 28 or rotor 4 can be adjusted from a range of approximately -400 rpm to 2400 rpm (carrier C in Fig. 4).

Adjustment to the speed of the rotor 4 is accomplished by the microcomputer 30 receiving a signal 36 from the rotor speed sensor 32 and comparing that speed to the signal 37 received from the engine speed sensor 33. Speed control of the rotors is based on a percentage or ratio of the speed of the engine. In a typical operation, the operator starts the combine with the engine at low idle. The operator then engages the clutch 21 and increases the engine speed to the 'rated' speed (approximately 2100 rpm). The operator then sets the desired rotor speed (with no crop in the rotors 4).

The transmission 10 uses a hydrostatic pump and motor so it is possible for these device to have some internal leakage that increases with higher loads, therefore it is necessary to continuously monitor and control the rotor speed so that the rotor speed does not decrease due to this leakage. Typical speed control would only compare actual rotor speed signals to the desired set point. However, it was found advantageous to adjust the rotor speed based on a wanted ratio of the rotor speed to the engine speed. For instance, if the engine is set at 2000 rpm and the operator sets the rotor speed to 1000 rpm, then the ratio is 1/2. This value follows from the speed settings made through the switch or keyboard 31 and is saved in the memory of the microcomputer 30. If the operator then reduces the engine speed to 1000 rpm, the controls decrease the rotor speed to 500 rpm. This is advantageous because, when operating in very heavy crop conditions (at maximum engine power) and a slug load of crop entering the rotors, the engine will lug down. With the present control system, the hydraulic motor 45 is equally slowed down, such that also the rotor speed decreases, resulting in an indication to the operator that the machine is overloaded. The operator can derive therefrom that he needs to lower the rotor power in order to allow the engine to recover. This can be obtained from slowing down the combine such that less crop material is taken in. Without this ratio control, the engine 15 is more prone to getting stalled. Overload would make the engine lug down and the rotor speed would also decrease. However, the operator or controller would try to increase rotor speed to maintain the set speed. This is undesirable because the controller would try to deliver more hydraulic power and thus lug the engine down further eventually stalling the engine.

In order to reverse the rotation of the rotors 4 so as to eject plugged crop material, the microcomputer 30 sends a signal 35 to the solenoid actuated valve 52 while ensuring the clutch 21 is disengaged. This valve extends the piston cylinder 53 into contact with the brake 54 preventing the movement of the ring gear 27. The microcomputer 30 also transmits a signal 34 to the hydrostatic pump 40 to reverse the angle of the swash plate, thus reversing the rotation of the hydrostatic motor 45 and motor output shaft 47. This reverses the rotation of the sun gear 26, rotor drive shaft 29, the rotor gear box output shaft 51 and ultimately the rotors 4. As seen in Fig. 4, graph B, when the ring gear 27 (R in Fig. 4) is braked, the speed of the carrier 28 (C in Fig. 4) and the rotor 4 can range from approximately +1500 rpm to -1500 rpm. Instead of prolonged reverse rotation to eject plugged material completely from the rotors 4, one could also use alternate rotation of the rotors from backward to forward and vice versa, in order to dislodge the plugged material and to force it through the rotor concaves. To this end it suffices to brake the ring gear 27 and to keep changing the position of the pump swash plate.

The brake 54 can also be actuated to slow down the rotors 4 when the threshing, separating and cleaning system 5 is disengaged. The rotors 4 are high inertia components which take several seconds before they come to a standstill. This run-out interval can be shortened considerably using the brake 54. The brake 54 also should be engaged when the engine 15 is running but the threshing system is not engaged. Otherwise the drag in the disengaged clutch 21 may still provide a minor torque on the planetary drive 25, which may slowly rotate the rotors 4. Such situation is hazardous to people working around the rotor area.

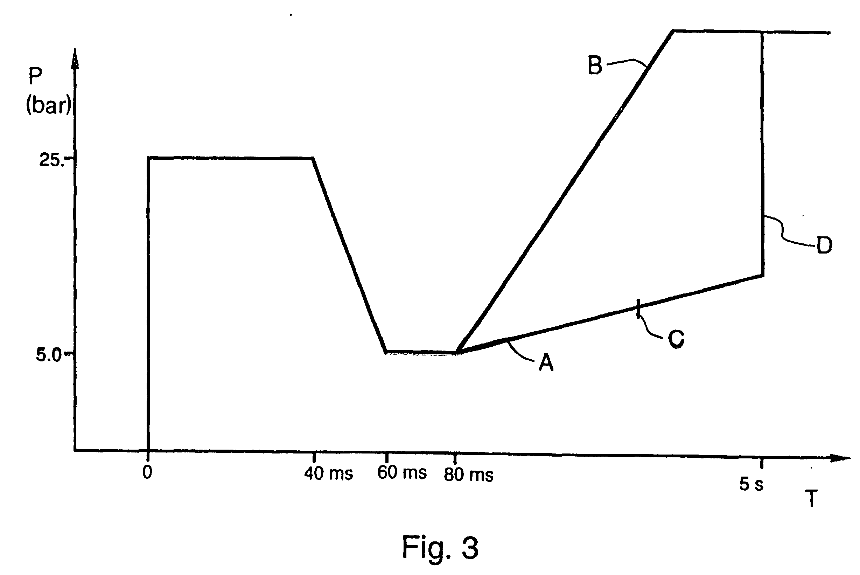

When initially starting the rotation of the rotors 4 or when heavy crop is encountered, the following procedure can be followed. The microcomputer 30 sends a signal 38 to the solenoid actuated, electro-hydraulic proportional pressure reducing valve 55 which controls the pressure to the hydraulic (or wet) clutch 21. As seen in Fig. 3, the valve 55 opens, connects and fills the clutch 21 with a quantity of hydraulic fluid from the reservoir. After an interval of time, the clutch 21 should be synchronised and fully engaged. Meanwhile the microcomputer monitors the signals 37 and 36 from the engine and rotor speeds sensors 33 and 32. In the event that the load on the rotor 4 is too great and the clutch 21 is not synchronised, the microcomputer 30 will detect a speed discrepancy. Upon detection of this error, a signal 38 can be sent to the clutch valve 55 permitting more fluid to enter the clutch 21.

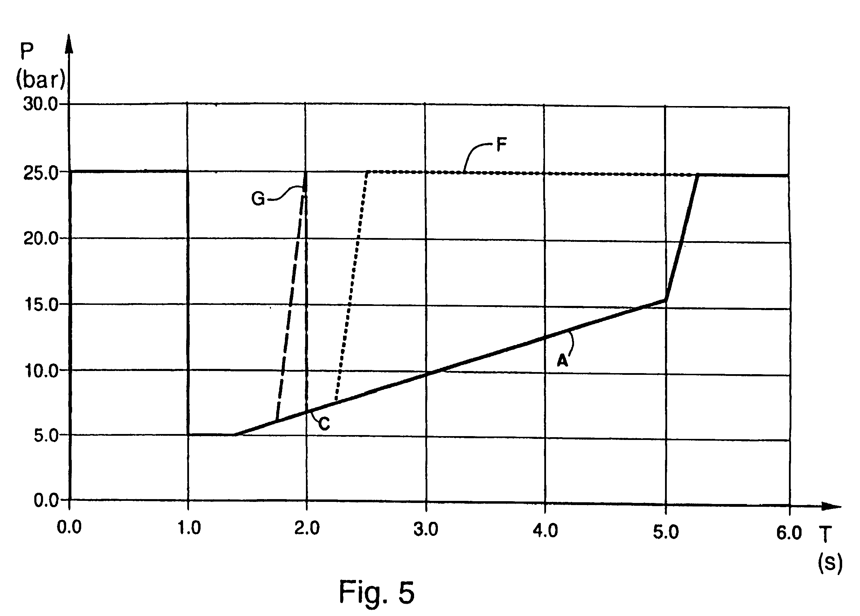

Figs 3 and 5 illustrated several options available for synchronising the clutch 21. The graphs do not show the actual pressure realised in the clutch, but the pressures at which the solenoid actuated, proportional pressure reducing valve 55 is set. There is always some delay between a change of a pressure setting for the valve and the achievement of the set pressure inside the clutch 21. In Fig. 3, at initial start up, a signal 38 is sent to the valve 55 to open it for a short interval (e.g. 40 ms) in order to fill the clutch 21. Thereafter the set pressure is reduced. At approximately 60 ms, the clutch 21 should start to carry torque and transmit power. The set pressure is now increased gradually to provide for a smooth engagement of the clutch. At point C, the clutch should have started rotating the rotor 4 although there still may be some slippage . Point D is when the clutch should be completely synchronised. Now the clutch should be pressurised to the full hydraulic pressure such that it may transmit a full load without slippage.

Curve B on Fig. 3 illustrates the clutch engagement when the threshing system 5 is not empty at start-up or in heavy crop conditions. In this instance, the slow, gradual increase in clutch pressure according to graph A in Figure 3, may delay the engagement of the rotor 4 for too long, such that too much energy is dissipated in the slipping clutch 21. This may cause permanent damage or premature wear to the components of the clutch 21. Therefore it is advantageous to control the valve 55 to increase the pressure along the steeper graph B in Figure 3. The clutch engagement may be less smooth, but the slippage is limited, such that the amount of heat produced inside the clutch body is substantially less.

Fig. 5 illustrates another course of action. The microcomputer 30 monitors the rotor signal 36 during start-up. At point C, e.g. after two seconds, the rotor should have rotated half a revolution. If this amount of rotation is not found, the clutch is far from synchronised and the threshing mechanism is assumed to be plugged. To continue to operate the clutch 21 in this manner over an extended period will damage the clutch 21. The microcomputer 30 is programmed to derive this plugging condition from the rotor speed sensor and to react thereto by sending a signal 38 to the clutch valve 55 to open it almost instantly (graph F in Fig. 5). The valve allows more hydraulic fluid to enter the clutch 21. This increased pressure allows the clutch 21 to synchronise quickly and to transmit the full engine torque to the rotor 4.

Depending on the type of heavy conditions the rotor 4 is experiencing, the microcomputer 30 can transmit different signals 38 to the clutch valve 55. These are compared in Fig. 5 to the normal start up mode (line A in Fig. 5 and as previously discussed and seen in Fig. 3). One alternative mode allows for a periodic 'spike' (line G in Fig. 5) or brief opening of the clutch valve 55 so as to allow a quantity of hydraulic fluid to enter the clutch 21. Another mode (line F in Fig. 5) allows for the clutch valve 55 to be opened when the lack of synchronisation of the clutch 21 (as previously discussed) is detected. Of course, both of these modes could be used.

The rotors 4 are heavy, large inertia parts and it is necessary during the initial rotor engagement to reduce stress on the engine, reduce stress of drives and provide smoother (and more pleasing) operation to the operator during the initial start-up period. To accomplish this the microcomputer can also effect slow engagement of the rotors 4. For instance, even though an operator may request a rotor speed that is very high, the microcomputer can temporarily change the swash plate of hydraulic pump 40 to engage the rotors 4 at a slower speed. The clutch 21 is engaged until synchronous. The rotors 4 are now rotated at a lower than operator desired speed. Finally the hydraulic pump swash plate is adjusted to realise originally desired speed. In this manner the clutch 21 only has to speed up the rotor 4 partially and the hydraulic pump 40 and motor 45 speed up the rotor the remainder.

It will be obvious to those skilled in the art that various changes may be made without departing from the scope of the invention and the invention is not to be considered limited to what illustrated in the drawings and described in the specification. For instance, the hydro-mechanical transmission system may also be used for driving a threshing system having only one threshing rotor. It can also be used for driving crop processing systems in other types of harvesting machines. It is envisageable to use the transmission system for driving the cutterhead in a forage harvester or for driving a header which collects crop material from a field and feeds it to the crop processing system of the harvesting machine. In the described embodiment power from the clutch 21 is transferred upon the planetary drive 25 by the main output gear 24. This gear may be replaced by other drive means such as a belt or chain transmission. It is also possible to use the engine 15 and the clutch 21 to drive the sun gear 26, and the hydrostatic motor 45 to drive the ring gear 27 of the planetary drive 25. Then the brake means can be installed on the drive shaft of the sun gear.

## Claims

1. An agricultural harvesting machine (1), comprising:
an engine (16) having an engine drive shaft (16) :
a crop processing means (5) comprising a rotor (4) having a rotor drive shaft (29); and
a hydro-mechanical transmission system (10) for driving said crop processing means (5), said system comprising:
- a hydrostatic pump (40) operably connected to said engine drive shaft (16);
- a hydrostatic motor (45) operably connected to said hydrostatic pump (40) and having a motor output shaft (47);
- a clutch (21) operably connected to said engine drive shaft (16) and having a clutch output means (24), said clutch (21) being provided with clutch control means (55) for engaging and disengaging said clutch (21);
- a planetary drive (25) operably connected to said clutch output means (24) and to said motor output shaft (47) and having a drive output means operably connected to said rotor drive shaft (29);
- an engine speed sensor (33) for generating a signal (37) indicative of the speed of said engine (15) ;
- a rotor speed sensor (32) for generating a signal (36) indicative of the speed of said rotor (4) ; and
- transmission control means (30, 31) for controlling the engagement of said clutch (21) and the setting of said hydrostatic pump (40), said transmission control means (30, 31) comprising a microcomputer (30) comprising:
a means for receiving said signal (37) from said engine speed sensor (33);
a means for receiving said signal (36) from said rotor speed sensor (32);
a means for sending a pump control signal (34) to said hydrostatic pump (40); and
a means for sending a clutch control signal (38) to said clutch control means (55);
wherein said transmission control means (30, 31) are operable to control said clutch (21) and said hydrostatic pump (40) to adapt said rotor speed such that the ratio of said engine speed and said rotor speed is equal to a predetermined ratio value,
**characterised in that** said transmission control means (30, 31) further comprises:
means (31) for entering a value for the wanted engine speed and a value for the wanted rotor speed; and
means for deriving said ratio value from said engine speed and rotor speed values.

2. An agricultural harvesting machine according to claim 1, **characterised in that**:
said hydro-mechanical transmission system (10) further comprises drive control means. (52, 53) for controlling a component (27) of said planetary drive (25); and
said transmission control means (30, 31) comprise means for sending a drive control signal (35) to said drive control means (52, 53).

3. An agricultural harvesting machine according to claim 2, **characterised in that**:
said component (27) is a ring gear operably connected to said clutch output means (24); and
said planetary drive (25) further comprises:
- a sun gear (26) operably connected to said motor output shaft (47) of said hydrostatic motor (45); and
- a planet gear carrier (28) operably connected to said drive output means (29).

4. An agricultural harvesting machine according to claim 3, **characterised in that** said drive control means (52, 53) comprise a braking means (53) for arresting said component (27) of said planetary drive (25).

5. An agricultural harvesting machine according to claim 4, **characterised in that** said drive control means (52, 53) comprise:
a valve (52) operable to receive said drive control signal (35); and
a hydraulic cylinder assembly (53) operably connected to said valve (52) and disposed adjacent said component (27) for contacting said component (27) upon actuation of said valve (52) in response to said drive control signal (35).

6. An agricultural harvesting machine according to claim 4, **characterised in that** said braking means comprise:
a park pawl disposed adjacent said component (27) for arresting said component (27) in response to said drive control signal.

7. An agricultural harvesting machine according to any of the preceding claims, **characterised in that** said clutch control means comprise a solenoid actuated, proportional pressure reducing valve (55), connected to said transmission control means (30, 31) for engaging and disengaging said clutch (21) in response to a clutch control signal (38) from said transmission control means (30, 31).

8. An agricultural harvesting machine according to claim 7, **characterised in that** said microcomputer (30) is programmed to generate a clutch control signal (38) which increases gradually for smooth engagement of clutch (21).

9. An agricultural harvesting machine according to any of the preceding claims, **characterised in that** said rotor drive shaft (29) is operably connected to said rotor (4) by a bevel gearbox (50).

10. An agricultural harvesting machine according to any of the preceding claims, **characterised in that** said clutch (21), said clutch output means (24) and said planetary drive (25) are mounted into a single gearbox (20).

11. An agricultural harvesting machine according to any of the preceding claims, **characterised in that** planetary drive (25) is operably connected to said clutch output means by a main output gear (24) which is operable to drive further components (3) of said agricultural harvesting machine.

12. An agricultural harvesting machine according to claim 11, **characterised in that** said harvesting machine is a combine harvester (1), said rotor is a threshing rotor (4) and said further components comprise an elevator (3).

13. A method of operating an agricultural harvesting machine according to any of the preceding claims, said method comprising the steps of:
entering a value for the wanted engine speed into the transmission control means (30, 31);
entering a value for the wanted rotor speed into the transmission control means (30, 31);
deriving a speed ratio value from said entered engine and rotor speed values;
monitoring the signal (37) of said engine speed sensor (33) and the signal (36) of said rotor speed sensor (32);
calculating the ratio of the rotor speed to the engine speed;
comparing the calculated ratio to said derived speed ratio value; and
upon said ratio deviating from said derived value, sending a signal (34) to said hydrostatic pump (40) to decrease or increase the flow of hydraulic fluid to said hydrostatic motor (45) in order to change the speed of said drive output means (29) and of said rotor drive shaft (29) until said speed ratio is re-established to said entered speed ratio value.

14. A method of operating an agricultural harvesting machine according to claim 7, comprising the steps of:
giving a clutch engagement command to said transmission control means (30, 31);
providing a clutch control signal (38) to said valve (55) for steadily increasing the pressure on said clutch (21) until a predetermined maximum pressure is reached;
monitoring the signal (36) of said rotor speed sensor (32) in order to determine the rotation of said rotor (4);
after a predetermined time interval, comparing the determined rotation with a minimum threshold in order to check for excessive slippage of said clutch (21); and
when said determined rotation falls below said threshold, interrupting said steadily increasing clutch control signal (38).

15. A method according to claim 14, **characterised in that** said minimum threshold is no more than half a revolution and said predetermined time interval is no less than two seconds.

16. A method according to claim 14 or 15, **characterised in that** it comprises the further step of:
providing a steeply increasing clutch control signal (38) to immediately apply said maximum pressure to said clutch (21) and effect full engagement thereof.

17. A method according to claim 14 or 15, **characterised in that** it comprises the further step of:
providing a peak clutch control signal (38) to apply a momentary pressure peak (G) to said clutch (21) in order to momentarily reduce the slippage thereof.

18. A method according to any of the claims 14 to 17, **characterised in that** said clutch control signal (38) comprises a high initial portion for instantly filling said clutch (21) with hydraulic fluid and effecting primary engagement of said clutch (21).

19. A method of operating an agricultural harvesting machine according to claim 4, comprising the steps of:
disengaging said clutch (21);
actuating said braking means in order to arrest said component (27) of said planetary drive (25); and
sending a signal to said hydrostatic pump (40) to reverse the flow of hydraulic fluid to said hydrostatic motor (45) in order to reverse said drive output means and said rotor drive shaft (29) for dislodging of material stuck in said crop processing means (5).

20. A method according to claim 19, **characterised in that** it comprises the further steps of:
actuating said braking means (53) for continued arresting of said component (27) of said planetary drive (25); and
sending a signal to said hydrostatic pump (40) to reinstate normal flow of hydraulic fluid to said hydrostatic motor (45) in order to rotate said drive output means and said rotor drive shaft (29) in the normal direction at a reduced speed for further dislodging of material stuck in said crop processing means (5).

## Patentansprüche

1. Landwirtschaftliche Erntemaschine (1) mit:
- einem Antriebsmotor (15), der eine Antriebsmotor-Abtriebswelle (16) aufweist;
- einer Emtemateriat-Verarbeitungseinrichtung (5), die einen Rotor (4) umfasst, der eine Rotor-Antriebswelle (29) aufweist; und
einem hydromechanischen Getriebesystem (10) zum Antrieb der Emtematerial-Verarbeitungseinrichtung (5), wobei das System folgendes umfasst:
- eine hydrostatische Pumpe (40), die betriebsmäßig mit der Antriebsmotor-Abtriebswelle (16) verbunden ist;
- einem hydrostatischen Motor (45), der betriebsmäßig mit der hydrostatischen Pumpe (40) verbunden ist und eine Motor-Ausgangswelle (47) aufweist;
- eine Kupplung (21), die betriebsmäßig mit der Antriebsmotor-Abtriebswelle (16) verbunden ist und eine Kupplungs-Ausgangseinrichtung (24) aufweist, wobei die Kupplung (21) mit Kupplungs-Steuereinrichtungen (55) zum Einkuppeln und Auskuppeln der Kupplung (21) verbunden ist;
- ein Planetengetriebe (25), das betriebsmäßig mit der Kupplungs-Ausgangseinrichtung (24) und der Motor-Ausgangswelle (47) verbunden ist und eine Antriebs-Ausgangseinrichtung aufweist, die betriebsmäßig mit der Rotor-Antriebswelle (29) verbunden ist;
- einen Antriebsmotor-Drehzahlsensor (33) zur Erzeugung eines Signals (37), das die Drehzahl des Antriebsmotors (15) anzeigt;
- einen Rotor-Drehzahlsensor (32) zur Erzeugung eines Signals (36), das die Drehzahl des Rotors (4) anzeigt; und
- Getriebe-Steuereinrichtungen (30, 31) zur Steuerung des Einkuppelns der Kupplung (21) und der Einstellung der hydrostatischen Pumpe (40), wobei die Getriebe-Steuereinrichtung (30, 31) einen Mikrocomputer (30) umfasst, der folgendes umfasst:
eine Einrichtung zum Empfang des Signals (37) von dem Antriebsmotor-Drehzahlsensor (33);
eine Einrichtung zum Empfang des Signals (36) von dem Rotor-Drehzahlsensor (32);
eine Einrichtung zum Senden eines Pumpen-Steuersignals (34) an die hydrostatische Pumpe (40); und
eine Einrichtung zum Senden eines Kupplungs-Steuersignals (38) an die Kupplungs-Steuereinrichtung (55);
wobei die Getriebe-Steuereinrichtungen (30, 31) betreibbar sind, um die Kupplung (21) und die hydrostatische Pumpe (40) zu steuern, um die Rotor-Drehzahl derart anzupassen, dass das Verhältnis der Antriebsmotor-Drehzahl und der Rotor-Drehzahl gleich einem vorgegebenen Verhältniswert ist;
**dadurch gekennzeichnet, dass** die Getriebe-Steuereinrichtung (30, 31) weiterhin folgendes umfasst:
Einrichtungen (31) zur Eingabe eines Wertes für die gewünschte Antriebsmotor-Drehzahl und eines Wertes für die gewünschte Rotor-Drehzahl; und
Einrichtungen zum Ableiten des Verhältniswertes aus den Antriebsmotor-Drehzahl- und Rotor-Drehzahl-Werten.

2. Landwirtschaftliche Erntemaschine nach Anspruch 1, **dadurch gekennzeichnet, dass**:
das hydromechanische Getriebesystem (10) weiterhin Antriebs-Steuereinrichtungen (52, 53) zur Steuerung einer Komponente (27) des Planetengetriebes (25) umfasst; und
die Getriebe-Steuereinrichtungen (30, 31) Einrichtungen zum Senden eines Antriebs-Steuersignals (35) an die Antriebs-Steuereinrichtung (52, 53) umfassen.

3. Landwirtschaftliche Erntemaschine nach Anspruch 2, **dadurch gekennzeichnet, dass**:
die Komponente (27) ein Ringzahnrad ist, das betriebsmäßig mit der Kupplungs-Ausgangseinrichtung (24) verbunden ist; und
das Planetengetriebe (25) weiterhin folgendes umfasst:
- ein Sonnenrad (26), das betriebsmäßig mit der Motor-Ausgangswelle (47) des hydrostatischen Motors (45) verbunden ist; und
- einen Planetenrad-Träger (28), der betriebsmäßig mit der Antriebs-Ausgangseinrichtung (29) verbunden ist.

4. Landwirtschaftliche Erntemaschine nach Anspruch 3, **dadurch gekennzeichnet, dass** die Antriebs-Steuereinrichtungen (52, 53) eine Bremseinrichtung (53) zum Arretieren der Komponente (27) des Planetengetriebes (25) umfassen.

5. Landwirtschaftliche Erntemaschine nach Anspruch 4, **dadurch gekennzeichnet, dass** die Antriebs-Steuereinrichtungen (52, 53) folgendes umfassen:
ein Ventil (52), das zum Empfang des Antriebs-Steuersignals (35) betreibbar ist; und
eine Hydraulikzylinder-Baugruppe (53), die betriebsmäßig mit dem Ventil (52) verbunden und benachbart zu der Komponente (27) angeordnet ist, um mit der Komponente (27) bei Betätigung des Ventils (52) in Abhängigkeit von dem Antriebs-Steuersignal (35) in Berührung zu kommen.

6. Landwirtschaftliche Erntemaschine nach Anspruch 4, **dadurch gekennzeichnet, dass** die Bremseinrichtungen folgendes umfassen:
eine Park-Klinke, die benachbart zu der Komponente (27) angeordnet ist, um die Komponente (27) in Abhängigkeit von dem Antriebs-Steuersignal zu arretieren.

7. Landwirtschaftliche Erntemaschine nach einem der vorhergehenden Ansprüche, **dadurch gekennzeichnet, dass** die Kupplungs-Steuereinrichtungen ein magnetspulenbetätigtes, proportionales Druckreduzierventil (55) umfassen, das mit der Getriebe-Steuereinrichtung (30, 31) verbunden ist, um die Kupplung (21) in Abhängigkeit von einem Kupplungs-Steuersignal (38) von der Getriebe-Steuereinrichtung (30, 31) einzukuppeln und auszukuppeln.

8. Landwirtschaftliche Erntemaschine nach Anspruch 7, **dadurch gekennzeichnet, dass** der Mikroprozessor (30) so programmiert ist, dass er ein Kupplungs-Steuersignal (38) erzeugt, das graduell für ein sanftes Einkuppeln der Kupplung (21) ansteigt.

9. Landwirtschaftliche Erntemaschine nach einem der vorhergehenden Ansprüche, **dadurch gekennzeichnet, dass** die Rotor-Antriebswelle (29) betriebsmäßig mit dem Rotor (4) über ein Kegelradgetriebegehäuse (50) verbunden ist.

10. Landwirtschaftliche Erntemaschine nach einem der vorhergehenden Ansprüche, **dadurch gekennzeichnet, dass** die Kupplung (21), die Kupplungs-Ausgangseinrichtung (24) und das Planetengetriebe (25) in einem einzigen Getriebegehäuse (20) befestigt sind.

11. Landwirtschaftliche Erntemaschine nach einem der vorhergehenden Ansprüche, **dadurch gekennzeichnet, dass** das Planetengetriebe (25) betriebsmäßig mit der Kupplungs-Ausgangseinrichtung über ein Haupt-Ausgangszahnrad (24) verbunden ist, das zum Antrieb weiterer Komponenten (3) der landwirtschaftlichen Erntemaschine betreibbar ist.

12. Landwirtschaftliche Erntemaschine nach Anspruch 11, **dadurch gekennzeichnet, dass** die Erntemaschine ein Mähdrescher (1) ist, dass der Rotor ein Dreschrotor (4) ist, und dass die weiteren Komponenten einen Höhenförderer (3) umfassen.

13. Verfahren zum Betrieb einer landwirtschaftlichen Erntemaschine nach einem der vorhergehenden Ansprüche, wobei das Verfahren die folgenden Schritte umfasst:
Eingabe eines Wertes für die gewünschte Antriebsmotor-Drehzahl in die Getriebe-Steuereinrichtung (30, 31);
Eingabe eines Wertes für die gewünschte Rotor-Drehzahl in die Getriebe-Steuereinrichtung (30, 31);
Ableiten eines Drehzahl-Verhältniswertes aus den eingegebenen Antriebsmotor- und Rotor-Drehzahlwerten;
Überwachen des Signals (37) des Antriebsmotor-Drehzahlsensors (33) und des Signals (36) des Rotor-Drehzahlsensors (32);
Berechnen des Verhältnisses der Rotor-Drehzahl zu der Antriebsmotor-Drehzahl;
Vergleichen des berechneten Verhältnisses mit dem abgeleiteten Drehzahlverhältniswert; und
wenn das Verhältnis von dem abgeleiteten Wert abweicht, Senden eines Signals (34) an die hydrostatische Pumpe (40) zur Verkleinerung oder Vergrößerung der Strömung der Hydraulikflüssigkeit an den Hydraulikmotor (45), um die Drehzahl der Antriebs-Ausgangseinrichtung (29) und der Rotor-Antriebswelle (29) zu ändern, bis das Drehzahlverhältnis wieder auf dem eingegebenen Drehzahl-Verhältniswert gebracht wurde.

14. Verfahren zum Betrieb einer landwirtschaftlichen Erntemaschine gemäß Anspruch 7, mit den folgenden Schritten:
Liefern eines Kupplungs-Einkuppelbefehls an die Getriebe-Steuereinrichtung (30, 31);
Liefern eines Kupplungs-Steuersignals (38) an das Ventil (55) zur stetigen Vergrößerung des Druckes an der Kupplung (21), bis ein vorgegebener maximaler Druck erreicht ist;
Überwachen des Signals (36) des Rotor-Drehzahlsensors (32), um die Drehung des Rotors (4) festzustellen;
nachdem ein vorgegebenes Zeitintervall abgelaufen ist, Vergleichen der festgestellten Drehung mit einem minimalen Schwellenwert, um eine Prüfung auf ein übermäßiges Rutschen der Kupplung (21) durchzuführen; und
wenn die festgestellte Drehung unter den Schwellenwert fällt, Unterbrechen des stetig ansteigenden Kupplungs-Steuersignals (38).

15. Verfahren nach Anspruch 14, **dadurch gekennzeichnet, dass** der minimale Schwellenwert nicht mehr als eine halbe Umdrehung ist, und dass das vorgegebene Zeitintervall nicht kleiner als 2 Sekunden ist.

16. Verfahren nach Anspruch 14 oder 15, **dadurch gekennzeichnet, dass** es den weiteren Schritt der:
Lieferung eines steil ansteigenden Kupplungs-Steuersignals (38) umfasst, um unmittelbar den maximalen Druck an die Kupplung (21) anzulegen und deren volle Einkupplung zu bewirken.

17. Verfahren nach Anspruch 14 oder 15, **dadurch gekennzeichnet, dass** es den folgenden weiteren Schritt umfasst:
Liefern eines Spitzen-Kupplungs-Steuersignals (38) zum Anlegen einer momentanen Druckspitze (G) an die Kupplung (21), um momentan deren Rutschen zu verringern.

18. Verfahren nach einem der Ansprüche 14 bis 17, **dadurch gekennzeichnet, dass** das Kupplungs-Steuersignal (38) einen hohen Anfangsteil zur momentanen Füllung der Kupplung (21) mit Hydraulikflüssigkeit und zum Bewirken eines primären Einkuppelns der Kupplung (21) umfasst.

19. Verfahren zum Betrieb einer landwirtschaftlichen Erntemaschine nach Anspruch 4, mit den folgenden Schritten:
Auskuppeln der Kupplung (21);
Betätigen der Bremseinrichtung zum Arretieren der Komponente (27) des Planetengetriebes (25); und
Senden eines Signals an die hydrostatische Pumpe (40) zur Umkehrung der Strömung der Hydraulikflüssigkeit an den hydrostatischen Motor (45), um die Drehrichtung der Antriebs-Ausgangseinrichtung und der Rotor-Antriebswelle (29) umzukehren, um in der Emtematerial-Verarbeitungseinrichtung (25) verstopftes Material zu entfernen.

20. Verfahren nach Anspruch 19, **dadurch gekennzeichnet, dass** es die weiteren folgenden Schritte umfasst:
Betätigen der Bremseinrichtung (53) für eine fortgesetzte Arretierung der Komponente (27) des Planetengetriebes (25); und
Senden eines Signals an die hydrostatische Pumpe (40) zur Wiedereinleitung der normalen Strömung der Hydraulikflüssigkeit an den hydrostatischen Motor (45), um die Antriebs-Ausgangseinrichtung und die Rotor-Antriebswelle (29) in der normalen Richtung bei einer reduzierten Drehzahl zur weiteren Entfernung von Material zu drehen, das in der Erntematerial-Verarbeitungseinrichtung (5) verklemmt ist.

## Revendications

1. Machine de récolte agricole (2) comprenant :
un moteur à combustion (15) avec un arbre de commande (16) du moteur à combustion;
des moyens de traitement de la récolte (5) comprenant un rotor (4) avec un arbre de commande (29) du rotor ;
un système de transmission hydromécanique (10) pour la commande desdits moyens de traitement de la récolte (5), ledit système comprenant :
- une pompe hydrostatique (40) raccordée de manière fonctionnelle audit arbre de commande (16) du moteur à combustion;
- un moteur hydrostatique (45) raccordé de manière fonctionnelle à ladite pompe (40) hydrostatique et doté d'un arbre de sortie (47) du moteur);
- un embrayage (21) raccordé de manière fonctionnelle audit arbre de commande (16) du moteur à combustion et possédant des moyens de sortie d'embrayage (24), ledit embrayage (21) étant doté de moyens de commande d'embrayage (55) pour l'engagement et le dégagement dudit embrayage (21);
- une commande planétaire (25) raccordée de manière fonctionnelle auxdits moyens de sortie d'embrayage (24) et audit arbre de sortie (47) du moteur et possédant des moyens de sortie de la commande raccordés de manière fonctionnelle audit arbre de commande (29) du rotor ;
- un capteur de vitesse (33) du moteur à combustion pour la production d'un signal (37)indicatif de la vitesse dudit moteur à combustion (15);
- un capteur de vitesse (32) du rotor pour la production d'un signal (36) indicatif de la vitesse dudit rotor (4); et
- des moyens de commande (30, 31) de la transmission pour la commande de l'engagement dudit embrayage (21) et le réglage de ladite pompe hydrostatique (40), lesdits moyens de commande (30, 31) de la transmission comprenant un microordinateur (30) incluant :
des moyens pour recevoir ledit signal (37) à partir dudit capteur de vitesse (33) du moteur à combustion ;
des moyens pour recevoir ledit signal (36) à partir dudit capteur de vitesse du rotor (32);
des moyens pour l'envoi d'un signal de commande (34) de la pompe à ladite pompe hydrostatique (40) ; et
des moyens pour l'envoi d'un signal de commande (38) de l'embrayage auxdits moyens de commande (55) de l'embrayage ;
dans laquelle lesdits moyens de commande de la transmission (30, 31) sont fonctionnels pour commander ledit embrayage (21) et ladite pompe hydrostatique (40) pour adapter ladite vitesse du rotor de manière telle que le rapport entre la vitesse dudit moteur à combustion et la vitesse dudit rotor soit égale à un rapport prédéterminé,
**caractérisée en ce que** lesdits moyens de commande (30, 31) de la transmission comprennent également :
des moyens (31) pour introduire une valeur pour la vitesse souhaitée du moteur à combustion et une valeur pour la vitesse souhaitée du rotor ; et
des moyens pour tirer ledit rapport de la vitesse dudit moteur à combustion et des valeurs de vitesse du rotor.

2. Machine de récolte agricole selon la revendication 1, **caractérisée en ce que** :
ledit système de transmission hydromécanique (10) comprend également des moyens de contrôle de commande (52, 53) pour commander un composant (27) de ladite commande planétaire (25) ; et
lesdits moyens de commande de la transmission (30, 31) comprennent des moyens pour envoyer un signal de contrôle de la commande (35) auxdits moyens de contrôle de commande (52, 53).

3. Machine de récolte agricole selon la revendication 2, **caractérisée en ce que** :
ledit composant (27) est un pignon annulaire raccordé de manière fonctionnelle auxdits moyens de sortie de l'embrayage (24) ; et
ladite commande planétaire (25) comprend également :
- une roue solaire (26) raccordée de manière fonctionnelle audit arbre de sortie (47)du moteur dudit moteur hydrostatique (45) ; et
- un support de pignon planétaire (28) raccordé de manière fonctionnelle auxdits moyens de sortie de commande (29).

4. Machine de récolte agricole selon la revendication 3, **caractérisée en ce que** lesdits moyens de contrôle de commande (52, 53) comprennent des moyens de freinage (53) pour arrêter ledit composant (27) de ladite commande planétaire (25).

5. Machine de récolte agricole selon la revendication 4, **caractérisée en ce que** lesdits moyens de contrôle de commande (52, 53) comprennent :
une soupape (52) actionnable pour recevoir ledit signal de contrôle de commande (35) ; et
un cylindre hydraulique (53) raccordé de manière fonctionnelle à ladite soupape (52) et disposé à côté dudit composant (27) pour contacter ledit composant (27) en cas d'actionnement de ladite soupape (52) en réaction audit signal de contrôle de commande (35).

6. Machine de récolte agricole selon la revendication 4, **caractérisée en ce que** lesdits moyens de freinage comprennent :
un cliquet d'arrêt disposé à côté dudit composant (27) pour arrêter ledit composant (27) en réaction audit signal de contrôle de commande.

7. Machine de récolte agricole selon l'une quelconque des revendications précédentes, **caractérisée en ce que** lesdits moyens de commande de l'embrayage comprennent une soupape réductrice de pression proportionnelle (55), commandée par solénoïde, reliée auxdits moyens de contrôle de transmission (30, 31) pour engager et dégager ledit embrayage (21) en réaction à un signal de commande de l'embrayage (38) provenant desdits moyens de commande de transmission (30, 31).

8. Machine de récolte agricole selon la revendication 7 **caractérisée en ce que** ledit microordinateur (30) est programmé de manière à générer un signal de commande d'embrayage (38) qui augmente progressivement pour un engagement en douceur de l'embrayage (21).

9. Machine de récolte agricole selon l'une quelconque des revendications précédentes, **caractérisée en ce que** ledit arbre de commande du rotor (29) est raccordé de manière fonctionnelle audit rotor (4) par une boîte de vitesses orthogonale (50).

10. Machine de récolte agricole selon l'une quelconque des revendications précédentes, **caractérisée en ce que** ledit embrayage (21), lesdits moyens de sortie d'embrayage (24) et ladite commande planétaire (25) sont montés dans une boîte de vitesses unique (20).

11. Machine de récolte agricole selon l'une quelconque des revendications qui précèdent, **caractérisée en ce que** la commande planétaire (25) est raccordée de manière fonctionnelle auxdits moyens de sortie d'embrayage par un engrenage de sortie principal (24) qui peut fonctionner pour commander d'autres composants (3) de ladite machine de récolte agricole.

12. Machine de récolte agricole selon la revendication 11, **caractérisée en ce que** ladite machine de récolte est une moissonneuse-batteuse (1), ledit rotor est un rotor de battage (4) et lesdits autres composants comprennent un élévateur (3).

13. Méthode d'utilisation d'une machine de récolte agricole selon l'une des revendications qui précèdent, ladite méthode comprenant les étapes suivantes :
introduction d'une valeur pour la vitesse de moteur à combustion souhaitée dans les moyens de commande de transmission (30, 31) ;
introduction d'une valeur pour la vitesse de rotor souhaitée dans les moyens de commande de transmission (30, 31) ;
dérivation d'un rapport de vitesse desdites valeurs de vitesse du moteur à combustion et de rotors introduites ;
surveillance du signal (37) dudit capteur de vitesse (33) du moteur à combustion et du signal (36) dudit capteur de vitesse (32) du rotor;
calcul du rapport entre la vitesse du rotor et la vitesse du moteur à combustion;
comparaison du rapport calculé audit rapport de vitesse dérivé; et
en cas d'écart entre ledit rapport et ladite valeur dérivée, envoi d'un signal (34) à ladite pompe hydrostatique (40) pour diminuer ou augmenter le débit du liquide hydraulique vers ledit moteur hydrostatique (45) de manière à modifier la vitesse desdits moyens de sortie de commande (29) et dudit arbre de commande du rotor (29) jusqu'au rétablissement dudit rapport de vitesse selon ladite valeur du rapport de vitesse introduite.

14. Méthode d'utilisation d'une machine de récolte agricole selon la revendication 7, comprenant les étapes suivantes :
transmission d'une commande d'engagement de l'embrayage auxdits moyens de commande de transmission (30, 31) ;
fourniture d'un signal de commande d'embrayage (38) à ladite soupape (55) pour l'augmentation constante de la pression sur ledit embrayage (21) jusqu'à l'atteinte d'une pression maximale prédéterminée ;
surveillance du signal (36) dudit capteur de vitesse du rotor (32) de manière à définir la rotation dudit rotor (4) ;
après un intervalle de temps défini, comparaison de la rotation déterminée avec un seuil minimum de manière à vérifier l'excès de patinage dudit embrayage (21);et
lorsque ladite rotation définie tombe au-dessous dudit seuil, interruption dudit signal de commande d'embrayage à augmentation progressive (38).

15. Méthode selon la revendication 14, **caractérisée en ce que** ledit seuil minimum ne dépasse pas un demi-tour et ledit intervalle prédéfini n'est pas inférieur à deux secondes.

16. Méthode selon les revendications 14 ou 15, **caractérisée en ce qu'**elle comprend l'étape suivante :
fourniture d'un signal de commande d'embrayage à augmentation brusque (38) en vue d'appliquer immédiatement ladite pression maximale audit embrayage (21) et à réaliser l'engagement complet de ce dernier.

17. Méthode selon les revendication 14 ou 15, **caractérisée en ce qu'**elle comprend l'étape suivante:
fourniture d'un signal de commande d'embrayage de pointe (38) de manière à appliquer un pic de pression temporaire (G) audit embrayage (21) afin de diminuer temporairement son patinage.

18. Méthode selon l'une des revendications 14 à 17, **caractérisée en ce que** ledit signal de commande d'embrayage (38) comprend une portion initiale élevée pour le remplissage instantané dudit embrayage (21) au moyen de liquide hydraulique et pour réaliser l'engagement primaire dudit embrayage (21).

19. Méthode d'utilisation d'une machine de récolte agricole selon la revendication 4, comprenant les étapes suivantes :
dégagement dudit embrayage (21) ;
actionnement desdits moyens de freinage de manière à arrêter ledit composant (27) de ladite commande planétaire (25) ; et
envoi d'un signal vers ladite pompe hydrostatique (40) de manière à inverser le flux de liquide hydraulique en direction dudit moteur hydrostatique (45) afin d'inverser lesdits moyens de sortie de commande et ledit arbre de commande de rotor (29) pour déloger le produit pris dans lesdits moyens de traitement de la récolte (5).

20. Méthode selon la revendication 19, **caractérisée en ce qu'**elle comprend l'étape suivante :
actionnement lesdits moyens de freinage (53) pour l'arrêt continu dudit composant (27) de ladite commande planétaire (25) ; et
envoi d'un signal à ladite pompe hydrostatique (40) de manière à restaurer le flux normal de liquide hydraulique vers ledit moteur hydrostatique (45) afin de faire tourner lesdits moyens de sortie de la commande et ledit arbre de commande du rotor (29) dans le sens normal à vitesse réduite pour déloger le reste de produit pris dans lesdits moyens de traitement de la récolte (5).
